# EUROPÄISCHE PATENTSCHRIFT

(11) **EP 1 310 391 B1**
(45) Veröffentlichungstag und Bekanntmachung des Hinweises auf die Patenterteilung: **10.08.2005**
(21) Anmeldenummer: 02024847.2
(22) Anmeldetag: 08.11.2002
(51) Int. Cl.: B60H 1/00, B60H 1/32

(54) **Verfahren und Vorrichtung zur Regelung einer Klimaanlage mit Saugdruckregelkreis**
Method and apparatus for controlling an air conditioning apparatus with suction pressure control loop
Procédé et dispositif de réglage d'un système de climatisation avec boucle de contrôle de la pression d'entrée

(30) Priorität: 09.11.2001 DE 10156250
(43) Veröffentlichungstag der Anmeldung: 14.05.2003
(73) Patentinhaber: Behr GmbH & Co. KG, 70469 Stuttgart (DE); Behr-Hella Thermocontrol GmbH, 59557 Lippstadt (DE)
(72) Erfinder: Pankratz, Harri, 59494 Soest (DE); Sickelmann, Michael, 70188 Stuttgart (DE)
(74) Vertreter: Gleiss, Alf-Olav, Dr.jur. Dipl.-Ing.

(56) Entgegenhaltungen:
- EP-A- 0 894 651
- EP-A- 0 968 855
- EP-A- 1 059 183
- DE-A- 19 846 026
- US-B1- 6 202 430

## Beschreibung

Die Erfindung bezieht sich auf ein Verfahren und eine Vorrichtung zur Regelung einer Klimaanlage nach dem Oberbegriff des Anspruchs 1 bzw. 5.

Verfahren und Vorrichtungen dieser Art werden beispielsweise in Klimaanlagen von Kraftfahrzeugen eingesetzt, insbesondere in Anlagen, die mit CO₂ als Kältemittel arbeiten. In solchen CO₂-Klimaanlagen kann im überkritischen Betriebsfall der Kältemittel-Hochdruck in Abhängigkeit von der Kältemitteltemperatur im Kältemittelkreislauf nach einem Gaskühler/Kondensator so eingestellt werden, dass die Leistungszahl (COP) maximal ist. Im unterkritischen Betrieb stellt sich der Kältemittel-Hochdruck in Abhängigkeit von der Umgebungstemperatur ein. Sowohl im unter- als auch im überkritischen Betriebsfall sind der Kältemittel-Saugdruck, d.h. der Kältemitteldruck an der Kompressoreintrittsseite, und die Austrittstemperatur der am Verdampfer abgekühlten Luft zu regeln. In CO₂-Klimaanlagen bilden somit die Luftaustrittstemperatur am Verdampfer, der Kältemittel-Saugdruck und der Kältemittel-Hochdruck die nach entsprechenden Vorgaben einzuregelnden Zielgrößen der Klimaanlagenregelung.

Zur Einstellung der Kompressorleistung wird oftmals eine Kaskadenregelung mit einem unterlagerten Saugdruckregelkreis und einem überlagerten Verdampfertemperatur-Regelkreis verwendet, wobei letzterer den Saugdruck-Sollwert für den unterlagerten Saugdruckregelkreis vorgibt. Der Saugdruckregelkreis stellt eine externe elektronische Saugdruckregelung dar, die einen elektronischen Regler beinhaltet, der den Kompressor ansteuert, z.B. Stellventile desselben. Der Saugdruck-Istwert des Kältemittels an der Kompressoreintrittsseite wird herkömmlicherweise mittels eines dort positionierten Drucksensors erfasst und dem Saugdruckregler zugeführt. Verfahren und Vorrichtungen dieser Art sind in der Offenlegungsschrift DE 198 46 026 A1 offenbart.

Aus der Patentanmeldung EP 1 059 183 A2 ist ein Verfahren zur Regelung einer Klimaanlage bekannt, bei der ein Sollwert für den Saugdruck eines Kompressors bestimmt wird. Die Bestimmung des Sollwerts für den Saugdruck basiert auf der Abhängigkeit des Saugdrucks von der Temperatur des Ausblasluftstroms. Dementsprechend wird der Sollwert für den Saugdruck aus dem Sollwert für die Temperatur des Ausblasluftstroms ermittelt. Der Sollwert des Ausblasluftstroms ergibt sich wiederum aus einer Außentemperatur und der Position eines Schalters für die Klimaanlage.

Der Erfindung liegt als technisches Problem die Bereitstellung eines Verfahrens und einer Vorrichtung der eingangs genannten Art zugrunde, die eine Klimaanlagenregelung unter Verwendung eines Saugdruckregelkreises auch z.B. für CO₂-Klimaanlagen ermöglichen, ohne dazu einen Kältemittel-Saugdrucksensor zu erfordern.

Die Erfindung löst dieses Problem durch die Bereitstellung eines Verfahrens mit den Merkmalen des Anspruchs 1 und einer Vorrichtung mit den Merkmalen des Anspruchs 5. Erfindungsgemäß wird hierbei der Saugdruck-Istwert des Kältemittels indirekt dadurch bestimmt, dass die Kältemitteltemperatur an der Eintrittsseite oder der Austrittsseite des Kältemittelverdampfers oder innerhalb desselben erfasst und der Saugdruck-Istwert in Abhängigkeit von diesem erfassten Kältemitteltemperaturwert berechnet wird. Hierzu wird der entsprechende funktionale Zusammenhang zwischen niederdruckseitiger Kältemitteltemperatur im Verdampferbereich und Kältemittel-Saugdruck an der Kompressoreintrittsseite genutzt, der sich z.B. aus den physikalischen Gegebenheiten ergibt oder empirisch ermittelt werden kann. So kann z.B. bei Verwendung von CO₂ als Kältemittel über die Dampfdruckkurve von CO₂ der Kältemittel-Sättigungsdruck aus der erfassten Kältemitteltemperatur im Verdampferbereich berechnet werden, wobei im normalen Betrieb keine Überhitzung am Verdampferausgang auftritt. Der Kältemittel-Saugdruck kann dann in Abhängigkeit vom berechneten Sättigungsdruck an der Verdampferaustrittsseite und gegebenenfalls von weiteren systemrelevanten Systemgrößen, wie Kältemittel-Hochdruck nach Kompressor und Kältemitteltemperatur an der Gaskühleraustrittsseite, bestimmt werden.

In einer Weiterbildung der Erfindung nach Anspruch 2 bzw. 6 wird speziell die Kältemitteltemperatur an der Verdampferaustrittsseite erfasst und zur Saugdruckbestimmung herangezogen. Gegenüber einer Erfassung der Kältemitteltemperatur an der Verdampfereintrittsseite hat dies den Vorteil, dass die Saugdruckermittlung nicht mit Einflüssen einer eventuellen Kältemittelüberhitzung am Verdampfer und/oder von Kaltemittel-Druckverlusten im Verdampfer belastet ist.

In einer Weiterbildung der Erfindung nach Anspruch 3 bzw. 7 werden als weitere Einflussgrößen zur Bestimmung des Saugdruck-Istwertes mindestens die Kältemitteltemperatur an der Gaskühleraustrittsseite und/oder der Kältemitteldruck auf der Kompressoraustrittsseite herangezogen.

In einer Weiterbildung der Erfindung nach Anspruch 4 bzw. 8 beinhaltet die Klimaanlagenregelung eine Kaskadenregelung mit dem Saugdruckregelkreis, in welchem der Kältemittel-Saugdruck indirekt über die Kältemitteltemperatur im Verdampferbereich ermittelt wird, als unterlagertem Regelkreis und einem Klimatisierungslufttemperatur-Regelkreis als überlagertem Regelkreis, der die Temperatur der aus dem Verdampfer austretenden Luft einregelt.

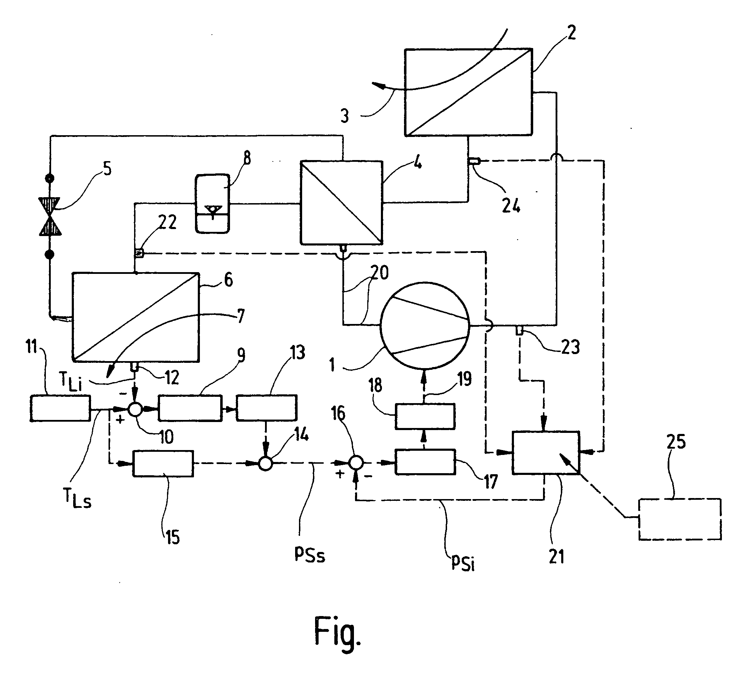

Eine vorteilhafte Ausführungsform der Erfindung ist in der Zeichnung dargestellt und wird nachfolgend beschrieben.

Die einzige Figur zeigt in blockdiagrammatischer Darstellung eine z.B. in Kraftfahrzeugen einsetzbaren Klimaanlage mit zugehöriger Klimaanlagenregelung.

Die in der Figur schematisch gezeigte Klimaanlage, bei der es sich insbesondere um eine mit dem Kältemittel CO₂ arbeitende Klimaanlage eines Kraftfahrzeuges handeln kann, beinhaltet einen Kältemittelkreislauf herkömmlicher Art mit einem Kompressor 1, an den sich hochdruckseitig ein Gaskühler/Kondensator 2 anschließt, in welchem das vom Kompressor 1 komprimierte Kältemittel durch einen Außenluftstrom 3 gekühlt wird und dabei je nach Betriebsbedingungen auch kondensiert. Vom Gaskühler 2 gelangt das komprimierte Kältemittel über einen inneren Wärmeübertrager 4 zu einem Expansionsorgan 5. An dieses schließt sich niederdruckseitig ein Verdampfer 6 an, der andererseits von einem zu klimatisierenden Luftstrom 7 beaufschlagt wird, bei dem es sich z.B. im Fall eines Kraftfahrzeugs um einen in einen Fahrzeuginnenraum auszublasenden Luftstrom handeln kann. Vom Verdampfer 6 gelangt das Kältemittel über einen niederdruckseitigen Sammler bzw. Akkumulator 8 zum inneren Wärmeübertrager 4, in welchem das niederdruckseitige mit dem hochdruckseitigen Kältemittel in Wärmeübertragungsverbindung steht. Das aus dem inneren Wärmeübertrager 4 niederdruckseitig austretende Kältemittel wird dann wieder vom Kompressor 1 angesaugt.

Der so aufgebauten Klimaanlage ist eine spezielle Regelung zugeordnet, deren Komponenten bzw. Funktionseinheiten ebenfalls in der Figur gezeigt sind, wobei die zugehörigen Leitungen zur Daten- und Signalübertragung zur besseren Unterscheidbarkeit von den Kältemittelleitungen des Kältemittelkreislaufs gestrichelt wiedergegeben sind. Wie aus der Figur ersichtlich, ist die Klimaanlagenregelung als Kaskadenregelung mit einem unterlagerten Saugdruckregelkreis und einem überlagerten Klimatisierungslufttemperatur-Regelkreis realisiert.

Der überlagerte Klimatisierungsluftstromtemperatur-Regelkreis beinhaltet eine Klimatisierungslufttemperatur-Reglereinheit 9, der von einem Subtrahierer 10 eingangsseitig die zugehörige Klimatisierungslufttemperatur-Regelabweichung zugeführt wird. Dazu erhält der Subtrahierer 10 am einen Eingang eine Information über den z.B. von den Fahrzeuginsassen gewünschten Sollwert T_{Ls} der Temperatur des Klimatisierungs- bzw. Ausblasluftstroms 7. Diese Temperatur-Sollwertinformation wird von einer entsprechenden Sollwertvorgabeeinheit 11 abgegeben. Die Information über den Istwert T_{Li} des über den Verdampfer 6 geführten Klimatisierungsluftstroms 7 erhält der Subtrahierer 10 an seinem anderen Eingang von einem entsprechenden, an der Luftaustrittsseite des Verdampfers 6 angeordneten Lufttemperatursensor 12.

Das Stellsignal der Klimatisierungslufttemperatur-Reglereinheit 9 wird von einer zugehörigen Kennlinieneinheit 13 gemäß einer dort abgelegten Kennlinie in eine Saugdrucksollwert-Korrekturinformation transformiert, die einem ersten Eingang eines Addierers 14 zugeführt wird. Über einen zweiten Eingang erhält der Addierer 14 eine Signalinformation von einer weiteren Kennlinieneinheit 15, welche die Information über den Klimatisierungslufttemperatur-Sollwert T_{Ls} gemäß einer entsprechenden Kennlinie in eine entsprechende Saugdruckinformation transformiert. Durch Summation bildet der Addierer 14 das Ausgangssignal des überlagerten Klimatisierungslufttemperatur-Regelkreises, das die Information über den Saugdruck-Sollwert p_{Ss} für den unterlagerten Saugdruck-Regelkreis trägt.

Der unterlagerte Saugdruck-Regelkreis beinhaltet eingangsseitig einen Subtrahierer 16, der aus dem zugeführten Saugdruck-Sollwert pss und einer ihm zugeführten Saugdruck-Istwertinformation p_{Si} die zugehörige Saugdruck-Regelabweichung ermittelt und letztere einer Saugdruck-Reglereinheit 17 zuführt. Das von dieser abgegebene Stellsignal wird von einer zugehörigen Kennlinieneinheit 18, die als entsprechende Saugdruck-Stelleinheit fungiert, gemäß einer in ihr abgelegten, zugehörigen Kennlinie in ein Ansteuersignal 19 transformiert, mit dem die Leistung des Kompressors 1 passend eingestellt wird.

Charakteristischerweise wird im Saugdruck-Regelkreis die Information über den Istwert p_{Si} des Kältemittel-Saugdrucks, d.h. des Kältemitteldrucks an der Eintrittsseite bzw. Saugseite 20 des Kompressors 1, nicht direkt über einen dort positionierten Drucksensor, sondern indirekt durch eine Saugdruckbestimmungseinheit 21 in Abhängigkeit von mehreren Einflussgrößen ermittelt. Zu diesen Einflussgrößen gehört insbesondere die niederdruckseitige Kältemitteltemperatur im Verdampferbereich, d.h. im Kältemittelkreislaufabschnitt zwischen Expansionsorgan 5 und Sammler 8. Im gezeigten Beispiel ist hierfür ein Kältemittel-Temperatursensor 22 an der Verdampferaustrittsseite angeordnet, der somit der Saugdruckbestimmungseinheit 21 eine Information über die Temperatur des aus dem Verdampfer 6 austretenden Kältemittels übermittelt. Alternativ kann der Kältemittel-Temperatursensor 22 im Verdampfer 6 selbst oder auf der Eintrittsseite desselben angeordnet sein.

Die gezeigte Positionierung an der Verdampferaustrittsseite hat dabei den Vorteil, dass auch eine je nach Betriebszustand der Klimaanlage auftretende Überhitzung am Verdampfer 6 berücksichtigt wird, was z.B. für eine Füllmengenüberwachung nutzbar ist, siehe bezüglich einer derartigen Füllmengenüberwachungstechnik auch die ältere deutsche Patentanmeldung 100 61 545.7 der Anmelderin, auf die hierfür bezüglich weiterer Details verwiesen wird. Außerdem hat die verdampferaustrittsseitige Positionierung des Kältemittel-Temperatursensors 22 den Vorteil, dass die dann von diesem abgegebene Temperaturinformation nicht von einer etwaigen, durch Druckverluste im Verdampfer 6 verursachten Temperaturdifferenz zwischen Eintritts- und Austrittsseite des Verdampfers 6 beeinflusst ist. Die an der Verdampferaustrittsseite gemessene Kältemitteltemperaturinformation gibt daher den Kältemittelzustand für die Saugdruckberechnung schon ohne entsprechende Druckverlust- und/oder Überhitzungskorrektur ausreichend genau wieder.

Als weitere Einflussgrößen werden der Saugdruckbestimmungseinheit 21 der von einem zugehörigen Drucksensor 23 erfasste, hochdruckseitige Kältemitteldruck an der Kompressoraustrittsseite und die über einen zugehörigen Kältemittel-Temperatursensor 24 erfasste, hochdruckseitige Kältemitteltemperatur an der Austrittsseite des Gaskühlers/Kondensators 2 zugeführt. Je nach Klimaanlagenauslegung und Anwendungsfall können der Saugdruckbestimmungseinheit 21 eine oder mehrere weitere Einflussgrößen zugeführt werden, wie schematisch durch einen gestrichelt gezeichneten Funktionsblock 25 repräsentiert.

Aus der vom niederdruckseitigen Kältemittel-Temperatursensor 22 übermittelten Information über die Kältemitteltemperatur im Verdampferbereich, im gezeigten Beispiel speziell an der Verdampferaustrittsseite, berechnet die Saugdruckbestimmungseinheit 21 zunächst über die Dampfdruckkurve des Kältemittels, d.h. beispielsweise von CO₂, den zugehörigen Sättigungsdampfdruck, wobei im Normalbetrieb der Anlage keine Überhitzung am Verdampfer auftritt. Anhand des so berechneten Kältemittel-Sättigungsdampfdrucks ermittelt die Saugdruckbestimmungseinheit 21 dann in zusätzlicher Abhängigkeit der anderen zugeführten Einflussgrößen gemäß dem Fachmann bekannter, physikalischer Gesetzmäßigkeiten und/oder abgelegter, z.B. empirisch ermittelter Kennlinien oder Kennfelder den zugehörigen Saugdruck-Istwert p_{Si}, der zur Eingangsseite des Saugdruckregelkreises, d.h. zum zugehörigen Subtrahierer 16, rückgekoppelt wird. Bevorzugt beinhaltet die Saugdruckbestimmungseinheit 21 zur Erfüllung dieser oben beschriebenen Funktionalität ein digitales Filter.

Somit werden erfindungsgemäß eine Vorrichtung und ein Verfahren zur Klimaanlagenregelung mit einem Saugdruckregelkreis bereitgestellt, die ohne Saugdrucksensor auskommen, indem der Saugdruck-Istwert des Kältemittels anhand der erfassten niederdruckseitigen Kältemitteltemperatur im Verdampferbereich und bevorzugt an der Verdampferaustrittsseite und je nach Anwendungsfall in Abhängigkeit weiterer Einflussgrößen, wie in Abhängigkeit vom Kältemittel-Hochdruck und von der hochdruckseitigen Kältemitteltemperatur an der Austrittsseite des Gaskühlers/Kondensators, indirekt ermittelt wird.

Es versteht sich, dass die Erfindung neben der gezeigten weitere mögliche Realisierungen umfasst. So kann je nach Anwendungsfall der überlagerte Klimatisierungslufttemperatur-Regelkreis entfallen und die Information über den zu wählenden Saugdruck-Sollwert anderweitig dem Saugdruckregelkreis zugeführt werden.

## Patentansprüche

1. Verfahren zur Regelung einer Klimaanlage, insbesondere einer Fahrzeugklimaanlage, bei dem
- der Kältemittel-Saugdruck eines Kompressors (1) im Kältemittelkreislauf der Klimaanlage geregelt wird, wobei der Saugdruck-Istwert (p_{Si}) bestimmt und durch entsprechende Ansteuerung des Kompressors (1) auf einen vorgebbaren Saugdruck-Sollwert (p_{Ss}) eingeregelt wird,
**dadurch gekennzeichnet, dass**
- die niederdruckseitige Kältemitteltemperatur an vorgebbarer Stelle eines Verdampferbereich-Kältemittelkreislaufabschnitts erfasst wird und
- der Saugdruck-Istwert (p_{Si}) wenigstens in Abhängigkeit von der erfassten niederdruckseitigen Kältemitteltemperatur berechnet wird.

2. Verfahren nach Anspruch 1, weiter **dadurch gekennzeichnet, dass** die Kältemitteltemperatur an der Austrittsseite eines Verdampfers (6) erfasst wird.

3. Verfahren nach Anspruch 1 oder 2, weiter **dadurch gekennzeichnet, dass** der Saugdruck-lstwert (p_{Si}) zusätzlich in Abhängigkeit vom Kältemittelhochdruck auf der Kompressoraustrittsseite und/oder von der hochdruckseitigen Kältemitteltemperatur an der Austrittsseite eines Gaskühlers/Kondensators (2) berechnet wird.

4. Verfahren nach einem der Ansprüche 1 bis 3, weiter **dadurch gekennzeichnet, dass** der Saugdruck-Sollwert (p_{Ss}) von einem überlagerten Klimatisierungslufttemperatur-Regelkreis für einen über einen Verdampfer (6) geleiteten Klimatisierungsluftstrom (7) vorgegeben wird.

5. Vorrichtung zur Regelung einer Klimaanlage, insbesondere einer Fahrzeugklimaanlage, mit
- einem Saugdruckregelkreis, der den Kältemittel-Saugdruck eines Kompressors (1) im Kältemittelkreislauf der Klimaanlage regelt und Saugdruckbestimmungsmittel zur Bestimmung des Saugdruck-Istwertes (p_{Si}) des Kältemittels sowie eine Saugdruckregeleinheit (17) zur Einregelung des Saugdruck-Istwertes auf einen vorgebbaren Saugdruck-Sollwert (p_{Ss}) durch entsprechende Ansteuerung des Kompressors (1) umfasst,
**dadurch gekennzeichnet, dass**
- die Saugdruckbestimmungsmittel einen Temperatursensor (22) zur Erfassung der niederdruckseitigen Kältemitteltemperatur an vorgebbarer Stelle eines Verdampferbereich-Kältemittelkreislaufabschnitts und eine Saugdruckberechnungseinheit (21) umfassen, die den Saugdruck-Istwert (p_{Si}) wenigstens in Abhängigkeit von der vom Temperatursensor gelieferten, niederdruckseitigen Kältemitteltemperatur berechnet.

6. Vorrichtung nach Anspruch 5, weiter **dadurch gekennzeichnet, dass** der Temperatursensor (22) an der Verdampferaustrittsseite angeordnet ist.

7. Vorrichtung nach Anspruch 5 oder 6, weiter **dadurch gekennzeichnet, dass** die Saugdruckbestimmungsmittel des weiteren einen an der Kömpressoraustrittsseite angeordneten Drucksensor (23) zur Erfassung des dortigen Kältemittel-Hochdrucks und/oder einen hochdruckseitigen Temperatursensor (24) zur Erfassung der Kältemitteltemperatur an der Austrittsseite eines Gaskühlers/Kondensators (2) beinhalten und die Saugdruckberechnungseinheit den Saugdruck-Istwert zusätzlich in Abhängigkeit von dem vom Drucksensor gelieferten Kältemittel-Hochdruck und der vom hochdruckseitigen Temperatursensor gelieferten, hochdruckseitigen Kältemitteltemperatur berechnet.

8. Vorrichtung nach einem der Ansprüche 5 bis 7, weiter **gekennzeichnet durch** einen dem Saugdruckregelkreis überlagerten Klimatisierungslufttemperatur-Regelkreis, der den Saugdruck-Sollwert (p_{Ss}) für den unterlagerten Saugdruckregelkreis vorgibt.

## Claims

1. Method for controlling an air conditioning apparatus, in particular a vehicle air conditioning apparatus, where
- the refrigerant suction pressure of a compressor (1) is controlled in the refrigerant circuit of the air conditioning apparatus, with the suction pressure actual value (p_{Si}) being determined and adjusted to a preselectable suction pressure setpoint value (p_{Ss}) by appropriate operation of the compressor (1), **characterized in that**
- the low-pressure-side refrigerant temperature is recorded at a preselectable point of an evaporator area refrigerant circuit section and
- the suction pressure actual value (p_{Si}) is calculated at least in dependence of the recorded low-pressure-side refrigerant temperature.

2. Method according to Claim 1, **characterized in that** the refrigerant temperature is recorded at the outlet side of an evaporator (6).

3. Method according to Claim 1 or Claim 2, **characterized in that** the suction pressure actual value (p_{Si}) is calculated additionally in dependence of the refrigerant high pressure on the compressor outlet side and/or of the high-pressure-side refrigerant temperature on the outlet side of a gas cooler/condenser (2).

4. Method according to one of Claims 1 to 3, further **characterized in that** the suction pressure setpoint value (p_{Ss}) is preselected by a superimposed air conditioning air temperature control loop for an air conditioning air flow (7) passed via an evaporator (6).

5. Apparatus for controlling of an air conditioning apparatus, in particular of a vehicle air conditioning apparatus, with
- a suction pressure control loop controlling the refrigerant suction pressure of a compressor (1) in the refrigerant circuit of the air conditioning apparatus and comprising suction pressure determining means to determine the suction pressure actual value (p_{Si}) of the refrigerant as well as a suction pressure control unit (17) for adjusting the suction pressure actual value to a preselectable suction pressure setpoint value (p_{Ss}) by appropriate controlling the compressor (1), **characterized in that**
- the suction pressure determining means comprise a temperature sensor (22) for recording the low-pressure-side refrigerant temperature at a preselectable point of an evaporator area refrigerant circuit section and a suction pressure determining unit (21) that calculates the suction pressure actual value (p_{Si}) at least in dependence of the low-pressure-side refrigerant temperature supplied by the temperature sensor.

6. Apparatus according to Claim 5, **characterized in that** the temperature sensor (22) is arranged on the evaporator outlet side.

7. Apparatus according to Claim 5 or Claim 6, **characterized in that** the suction pressure determining means furthermore contain a pressure sensor (23) arranged on the compressor outlet side for recording the refrigerant high pressure there and/or a high-pressure-side temperature sensor (24) for recording the refrigerant temperature at the outlet side of a gas cooler/condenser (2) and **in that** the suction pressure determining unit calculates the suction pressure actual value additionally in dependence of the refrigerant high pressure supplied by the pressure sensor and of the high-pressure-side refrigerant temperature supplied by the high-pressure-side temperature sensor.

8. Apparatus according to one of Claims 5 to 7, further **characterized by** an air conditioning air temperature control loop at a higher-level than the suction pressure control loop and preselecting the suction pressure setpoint value (p_{Ss}) for the cascade suction pressure control loop.

## Revendications

1. Procédé de réglage d'un système de climatisation, notamment d'un système de climatisation de véhicule, dans lequel
- la pression d'aspiration du frigorigène d'un compresseur (1) est réglée dans la boucle de frigorigène du système de climatisation, la valeur réelle de la pression d'aspiration (p_{Si}) étant déterminée et réglée en excitant de façon correspondante le compresseur (1) pour l'amener à une valeur théorique de pression d'aspiration (p_{Ss}) pouvant être fixée à l'avance, **caractérisé en ce que**
- la température du frigorigène du côté basse pression est détectée en un endroit pouvant être fixé à l'avance d'un segment du circuit de frigorigène situé dans la zone de l'évaporateur et
- la valeur réelle de la pression d'aspiration (p_{Si}) est au moins calculée en fonction de la température de frigorigène détectée du côté basse pression.

2. Procédé selon la revendication 1, **caractérisé en outre en ce que** la température de frigorigène est détectée au niveau du côté de sortie d'un évaporateur (6).

3. Procédé selon la revendication 1 ou 2, **caractérisé en outre en ce que** la valeur réelle de la pression d'aspiration (p_{Si}) est en outre calculée du côté de sortie d'un dispositif de refroidissement des gaz/condensateur (2), en fonction de la haute pression de frigorigène du côté de sortie du compresseur et/ou de la température de frigorigène du côté haute pression.

4. Procédé selon l'une quelconque des revendications 1 à 3, **caractérisé en outre en ce que** la valeur théorique de la pression d'aspiration (p_{Ss}) est fixée à l'avance par une boucle de contrôle de température de l'air de climatisation superposée acheminant un flux d'air de climatisation (7) dirigé via un évaporateur (6).

5. Dispositif de réglage d'un système de climatisation, notamment d'un système de climatisation de véhicule, avec
- une boucle de réglage de la pression d'aspiration qui règle la pression d'aspiration du frigorigène d'un compresseur (1) dans la boucle de frigorigène du système de climatisation et qui comprend des moyens de détermination de la pression d'aspiration pour déterminer la valeur réelle de la pression d'aspiration (p_{Si}) du frigorigène ainsi qu'une unité de réglage de la pression d'aspiration (17) pour régler la valeur réelle de la pression d'aspiration à une valeur théorique de la pression d'aspiration (p_{Ss}) pouvant être fixée à l'avance en excitant de façon correspondante le compresseur (1), **caractérisé en ce que**
- les moyens de détermination de la pression d'aspiration comprennent un capteur de température (22) pour détecter la température du frigorigène du côté basse pression en un endroit pouvant être fixé à l'avance d'un segment du circuit de frigorigène situé dans la zone de l'évaporateur et une unité de calcul de la pression d'aspiration (21) qui calcule la valeur réelle de la pression d'aspiration (p_{Si}) au moins en fonction de la température du frigorigène du côté basse pression détectée par le capteur de température.

6. Dispositif selon la revendication 5, **caractérisé en outre en ce que** le capteur de température (22) est disposé du côté de sortie de l'évaporateur.

7. Dispositif selon la revendication 5 ou 6, **caractérisé en outre en ce que** les moyens de détermination de la pression d'aspiration comportent en outre un capteur de pression (23) disposé du côté de sortie du compresseur pour détecter la haute pression du frigorigène à cet endroit et/ou un capteur de température (24) situé du côté haute pression pour détecter la température du frigorigène du côté de sortie d'un dispositif de refroidissement des gaz/condensateur (2) et **en ce que** l'unité de calcul de la pression d'aspiration calcule en outre la valeur réelle de la pression d'aspiration en fonction de la haute pression du frigorigène détectée par le capteur de pression et de la température de frigorigène du côté haute pression détectée par le capteur de température situé du côté haute pression.

8. Dispositif selon l'une quelconque des revendications 5 à 7, **caractérisé par** une boucle de réglage de la température de l'air de climatisation superposée à la boucle de réglage de la pression d'aspiration qui fixe à l'avance la valeur théorique de la pression d'aspiration (p_{Ss}) pour la boucle de réglage de la pression d'aspiration en cascade.
